# EUROPEAN PATENT APPLICATION

(11) **EP 1 860 844 A2**
(43) Date of publication of application: **28.11.2007**
(21) Application number: 07380148.2
(22) Date of filing: 25.05.2007
(51) Int. Cl.: H04L 29/06, H04M 7/00, G06F 9/46

(54) **A process for transforming and managing messages from SIP signaling into an event-managed asynchronous system.**

(30) Priority: 26.05.2006 ES 200601393
(71) Applicant: Vodafone Group PLC, Newbury Berkshire RG14 2FN (GB); Vodafone Espana, S.A., 28108 Alcobendas, Madrid (ES)
(72) Inventor: Cristobal Cristobal, José Manuel, 50002 Zaragoza (ES); Lucas Hernandez, Sergio, 50500 Tarazona-Zaragoza (ES)
(74) Representative: Carvajal y Urquijo, Isabel

(57) **Abstract**

The invention relates to a process for transforming and managing messages from SIP signaling in an event-managed asynchronous system, comprising:
- receiving (S0, S0', S0") at least one SIP signaling message in an application server (1),
- extracting certain information relating to a call from said SIP message,
- creating/modifying (S1, S1', S1") a new/existing entry in a tree structure in which said information is stored,
- creating (S2) an asynchronous event from said information stored in the tree,
- sending (S4) said asynchronous event to an Event Distribution Module (20), and,
- assigning the control of said event to an application which wants to control said call (S8) or to the server (S9).

## Description

### Field of the Invention

The present invention is comprised within JAVA technology based application servers, but providing a series of features of the communications applications; said features propose an asynchronous event-based treatment of the SIP protocol signaling.

### Background of the Invention

It is known that abbreviations and acronyms are frequently used in the field of mobile telephony. A glossary of acronyms/terms which are used throughout this specification is provided below:
- 3GPP: Third generation Partnership Program
- EJB: Enterprise Java Beans
- GSM: Global System for Mobile communications
- IN: Intelligent Network
- JEE: Java Enterprise Edition
- JMS: Java Messaging Service
- Http: Hypertext Transfer protocol
- MPCCS: Multi Party Call Control Service
- OSA/ PARLAY: Open System Architecture/ PARLAY
- RMI: Remote Method Invocation
- SLEE: Service Logic Execution Environment
- SOAP: Simple Object Access Protocol
- TCP-IP: Transfer Control Protocol - Internet Protocol

Exclusively in relation to application servers, there is currently a large number of commercial developments implementing the different versions of the JEE standard. Said application servers act as containers of different pieces of software developed in the form of WEB and EJB applications, etc., adding support for external access to the server by means of protocols like HTTP, SOAP, RMI, JMS, etc. Basically, these application servers provide an interface for accessing the system through TCP-IP-based protocols.

In addition to these application servers, there is currently a trend aimed at creating application servers which, using the same conceptual basis as JEE servers (or a very similar one based on standards), allowing housing telecommunication applications which can access network resources through a Standard Interface. Examples of this type are OSA/PARLAY and JAIN SLEE.

There are currently several commercial implementations of the JEE standard. In addition to these commercial implementations there are not so high a number of free implementations of this standard. The drawback involved in these implementations is that they do not allow access to telephony networks, and this feature would be difficult to implement using the provided facilities.

Apart from this handicap, using this type of application servers as a basis for the development of mobile telephony applications would imply having to assume a high delay in the response, because these application servers are not designed to assume the high transaction load needed by IN applications.

In other words, JEE-based application servers do not contemplate telephone communication as an interface by means of which the servers can be accessed. An interface could be implemented using the offered possibilities. Despite this fact, it would be a slow communication given that the structure of these servers has not been designed to provide service to such a high volume of requests and to such a high process load and which require an extremely low latency.

### Description of the Invention

The invention relates to a process for transforming and managing messages from SIP signaling in an event-managed asynchronous system according to claim 1. Preferred embodiments of the process are defined in the dependent claims.

The invention consists of transforming SIP protocol signaling into an event-managed asynchronous system, the reverse step being applicable, i.e. the transformation of asynchronous events into SIP signaling.

In this way, by means of the transformation and management of SIP signaling into asynchronous events, the ability to control calls generated by the SIP protocol is provided to the different applications deployed in an application server.

For the purpose of solving the previously mentioned drawbacks, the invention develops a process making use of an application server providing the applications deployed therein with the ability to use the telephony network to carry out intelligent network IN-based applications.

This application server allows making use of the JEE features. This server manages the information relating to the calls in a tree structure in the memory facilitating access to the information, accelerating event processing from both the applications and the communications systems. Only by using the network message or the event, the system compiles all the necessary information of a specific call, speeding up the processing thereof.

A first aspect of the present invention relates to a process for transforming and managing messages from SIP signaling in an event-managed asynchronous system comprising:
- receiving at least one SIP signaling message in an application server,
- extracting certain information relating to a call from said SIP message,
- creating a new entry or modifying an existing entry in a tree structure in which said information is stored,
- creating an asynchronous event from said information stored in the tree,
- sending said asynchronous event to an Event Distribution Module, and
- assigning the control of said event to an application which wants to control said call or to the server.

According to a preferred embodiment of the process for transforming and managing of the invention, said process for assigning control of the event consists of:
i) if it is an event relating to a new call, said Event Distribution Module searches for an application to control said call; in the event that it finds an application which can control said call, said application assumes control of the call, and otherwise the sever assumes control of the call;
ii) if it is an event relating to an ongoing call or to the end of a call, said Event Distribution Module verifies if said call is controlled by an application, and:
   a. if said call is controlled by an application, it verifies if said controlling application wants to process the event of said call; in the event that said event wants to process the event, said application continues with the control of the call, and otherwise, the server assumes control of the call; and,
   b. if said call is not controlled by any application, the process proceeds as if

it were a new call by searching for an application to control said call; the call thus being always controlled by the server or by a controlling application deployed in said server.

The search for an application to control said call (S6) is preferably made by taking into consideration that:
- said application must want to control said event;
- the information carried by the asynchronous event must comply with certain criteria.

In the event that it is the end of a call, said modification of the entry existing in the tree structure consists of eliminating such entry.

As previously indicated, by managing the information relating to calls by means of this type of tree structure in the memory, access to the information is facilitated, accelerating event processing from both the applications and the communications system.

This tree structure preferably includes an event tree and call tree.

Said event tree preferably has a fixed part defined by the events of the server, and a variable part defined by the applications deployed in said server to receive events.

Said fixed part is preferably created when the sever starts up, carrying out a tree structure with two levels in which en event defined by the server is included for each node of the tree; and said variable part is created from deployment descriptors of the applications deployed in the server.

Said call tree is preferably formed following a structure of levels in which:
- the Multi Party Call Control Service or MPCCS is located in a first level;
- each ongoing call managed by the server is located in a second level; and,
- each leg with information relating to each participant in a call is located in a third level.

### Brief Description of the Drawings

A series of drawings is very briefly described below which aid in better understanding the invention and are expressly related to an embodiment of said invention which is set forth as a non-limiting example thereof.
Figure 1 shows the main elements of a preferred embodiment of the application server forming part of the present invention.
Figure 2 shows the different components of the communication system.
Figure 3 shows the event and call tree used to structure and manage the information in the memory of the system of the invention.
Figure 4 shows an activity diagram for a new call.
Figure 5 shows an activity diagram similar to the one of Figure 4, but for an intermediate call.
Figure 6 shows an activity diagram similar to the one of Figures 4 and 5 but for the end of a call.

### Description of a Preferred Embodiment of the Invention

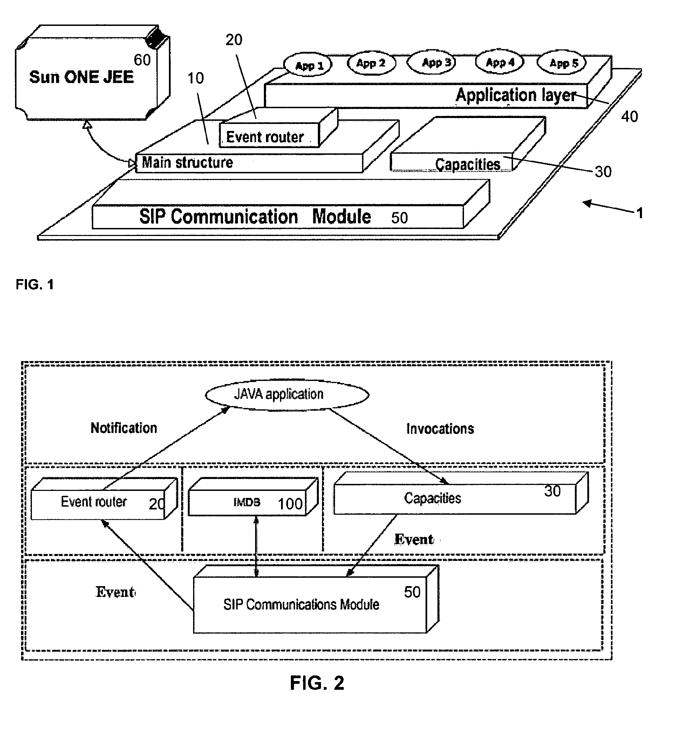

Figure 1 shows the main elements forming the application server 1 forming part of the invention, as well as the main elements with which said server comes into or is in contact.
- Central Module of the System or Framework 10: it acts as an operation control center of the entire system. It includes all the logics of the start and end thereof, the application configuration control and deployment of such applications. It also exposes the system interface which can be remotely accessed from the JEE application server for maintenance operations.
- Event Distribution Module or Event Router 20: it is the center for distributing events from the communications system to the applications. It receives all the events generated in the communication module and is in charge of sending them to all the applications interested in processing them.
- Capacity Module 30: this module is formed by the programming API of the system. This set of libraries is used by the applications while carrying out the management of the calls.
- Application Layer 40: it is formed by all the applications App 1, App 2, ... App 5 deployed in the system.
- Communications Module 50: this module makes use of a SIP protocol stack to allow communication in this protocol carrying out the transformation of the signaling generated by the protocol into asynchronous events which are processed by the different applications deployed in the server.
- Java Enterprise Edition SUN ONE JEE application server 60: it is useful as a functional support for the system. It contains the application for the maintenance and management thereof.

In the preferred embodiment of the invention, the base or nucleus of this application server 1 is Java JMX technology; this technology allows carrying out administration operations on software parts complying with a series of features; the rest of the server is implemented through JAVA standard technology.

JEE technology is also used to connect through JMS with the SUN ONE JEE application server.

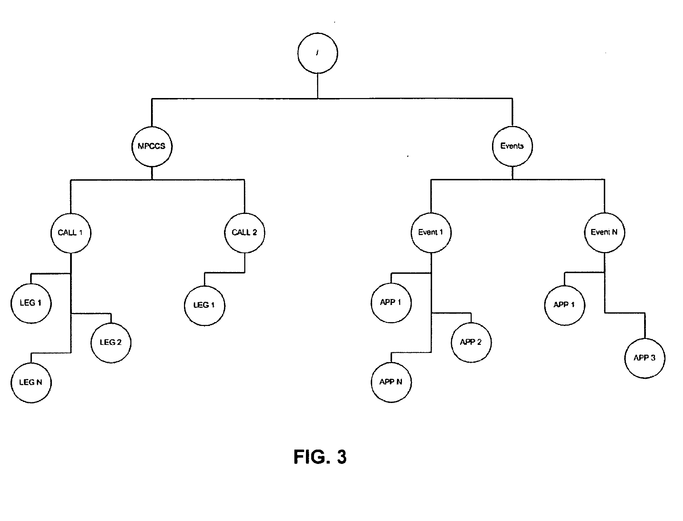

As has been indicated, the communications module 50 is developed based on a SIP signaling stack. After receiving the messages generated by the signaling of this protocol, the latter are transformed into asynchronous events and emitted through the server to allow the processing of the call by the different applications deployed in the server. In addition to emitting the events, a tree structure is maintained in the memory by mean of the IMDB module (see Figure 3) which allows maintaining control of all the ongoing calls, as well as of the different legs associated to each of these calls.

Figure 2 shows the different parts forming the communications system used in the present invention, which are:
- Communications Module 50: representing an abstraction of the SIP stack. This module abstracts the rest of the system for processing and parsing SIP signaling messages. This module is directly communicated with the IMDB module 100 for managing information in the memory.
- Event Distribution Module or Event Router 20: as previously indicated it receives events generated in the communications module and is in charge of distributing them among the different applications interested in processing them. It controls at all times which applications are interested in the different types of events and which is their operation mode.
- IMDB 100: it is the module of the system in charge of storing the information of the different active calls to accelerate and facilitate access thereto.
- Capacity Module 30: as previously indicated, this module provides the different programming APIs for the applications. The applications control the different ongoing calls through these APls. These events are generated independently of the programmer, which will simply express the execution of one of the control methods in its code.
- Java Application: it represents one of the multiple applications App1, App2, ... App 5 which can be deployed in the system and are the point where the information is processed.

Figure 3 shows the tree stricture used for managing the information in the memory of the system. This information is obtained from the SIP signaling information.

The right side of Figure 3 shows the structure of the event tree; the latter is constructed from, on one hand, the different types of events Event 1, ... Event N of the server, and on the other hand, by the different applications App 1, ... App N, which are recorded for receiving said events. Therefore this tree has a fixed part defined by the events and a variable part defined by the applications recorded at a certain time.

The fixed component is created when the server starts up, carrying out a tree structure with two levels in which an event defined by the server is included for each node of the tree. A listing of the criteria which have been used by the recorded applications to receive these events will be included in these nodes.

The variable component is created from the deployment descriptors of the applications recorded in the server. These descriptors are documents in xml format which must accompany the applications to be deployed in the server. The information they contain uniquely identifies the application and gives the information of the events which it must receive, including the receiving criteria. These criteria are used to decide which of the applications interested in a specific event have control of communication.

The recording criteria are defined by the server in the deployment file. They have a finite number and are defined by a unique identifier and an expression defining the criterion. For example, 976*[0,9]{6} would represent the numbers starting with 976 and having 6 more figures.

When one of the applications is eliminated, this tree is updated by eliminating the references relating to said application which existed in the different nodes forming this tree. This process includes both eliminating the nodes listing the application with the events and the criteria which the application has recorded and which are stored in the nodes of the events.

On the other hand, the call tree is formed following the level structure as follows:
- MPCCS (Multi Party Call Control Service): it stores information relating the external SIP communication with the internal events of the server and with the information stored in the lower levels. This information triad allows determining from receiving a SIP message the nodes within the tree where the location information related to said message is located.
- Call (Call 1, Call 2,...): it stores the information relating to each of the ongoing calls which are being managed in the server. That is, it records all the information common to the entire process of the call and its participants. This information is obtained from the first SIP message received by the server and updated with the information extracted from the following SIP messages derived from the communication. This update can also be carried out from the information created in the applications. The call nodes maintain information on the status of the communication.
- Leg (Leg 1, ... Leg N): it contains information relating to each end point involved in the communication (call); i.e. it represents a participant in a call. Said information is extracted from the SIP messages received by the server of the system. This information is likewise obtained from the applications related to the communication. The leg 2, ... leg N nodes are created by the applications, although the first one will always be created from the network.

Management of the information of this call tree is done throughout the life cycle of the managed calls. When new calls occur, call branches containing a leg node are added to the general structure of the tree. Said branches are updated with new leg nodes as communication is developed. In the event that a communicating party is eliminated, the leg node identifying said party will be eliminated.

Finally, when the call ends, the entire call branch is eliminated from the tree, including all the associated leg nodes as well as the information stored in the MPCCS node relating the SIP communication with the information of the server. Once a call branch is eliminated, said call is out of the server's control.

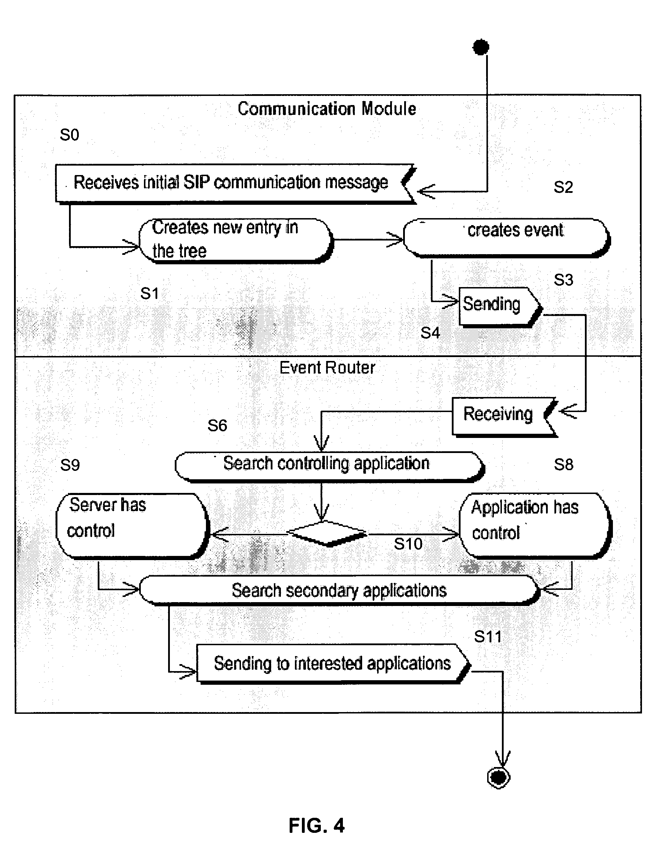

Figure 4 shows the activity diagram for a new call:
The server receives a SIP signaling message corresponding to the initiation of a communication (step S0) extracts the relevant information from the SIP message and creates a new entry in the tree structure (step S1) to store the information relating to the new communication in a quick and easy to access manner. Then the SIP message is transformed into an asynchronous event (step S2) which an application deployed in the server may be interested in. Once the event has been created, it is sent asynchronously (step S3) to the event router 20 (step S4).

As it is an event of a new communication or call, the search for an application deployed in the server which can control said communication (step S6) is carried out. The choice of this application is made by taking two factors into consideration:
- The application must want to control this specific event.
- The information carried by the asynchronous event must comply with certain criteria.

Once the search for the controlling application has been carried out and based on the obtained result, the decision of who is going to have control of the communication is made. Two situations may occur:
- No application which can have or which wants to have control of the communication has been found for this asynchronous event. In this case, the server assumes control of the communication (step S9).
- An application has been found to control the communication, assuming the role of controlling application during the entire communication (step S8).

That is, it is important that there is always someone who controls the call: if no application in particular controls it, the server will control the call.

The following step (S10) is to search for other applications which, in compliance with the selection criteria, want to receive event but do not want to take control of this communication.

Once all the applications which are interested in receiving the event and which can furthermore receive it have been obtained, the event is sent to each of the applications, each of them carrying out the parallel processing of said event (step S11).

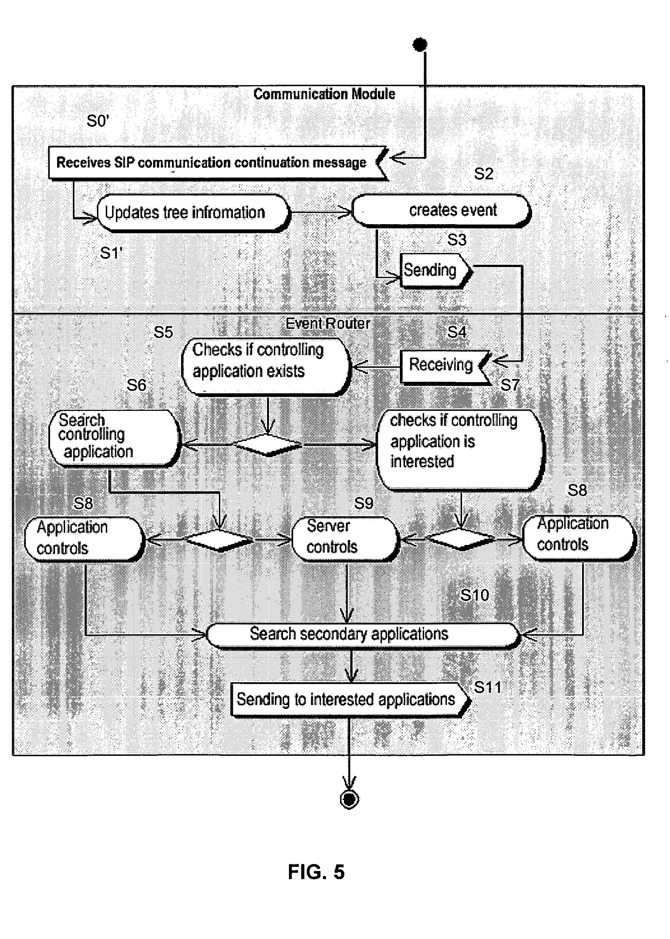

Figure 5 shows the activity diagram for an intermediate call:
The server receives a SIP signaling message corresponding to an ongoing communication which is being controlled by the server (step SO'). The server extracts the relevant information from the SIP message and updates the information relating to this communication in its corresponding position of the tree (step S1'). The SIP message is then transformed into an asynchronous event (step S2), which is asynchronously sent to the Event Router (step S3), allowing the communications module to carry out the processing of a new SIP signaling message while at the same time the Event Router carries out the processing of the received event (step S4).

In this case, the Event Router first verifies if the communication has an assigned controlling application (step S5). Two different situations may occur:
- The communication does not have a controlling application. The server carries out the search for said application (step S6). The choice of this application is made taking the two factors explained above into consideration:
   - The application must want to control this specific event.
   - The information carried by the asynchronous event must comply with certain criteria.
- The communication has a controlling application. The server verifies if the controlling application is interested in controlling the asynchronous event (step S7). Two different situations can occur:
   - The application wants to process the event. The application takes control of the communication for this event, therefore said event must reach the application (step S8).
   - The application is not interested in the control of this event. The server assumes control of the communication (step S9). In this case the controlling application does not want to take control of the communication, but it has the possibility of being able to receive the event but without being able to act on it.

Once the previous step has been carried out, the search for those applications which may be interested in receiving the event but without being able to interact with it (step S10) is carried out. These applications can only be those applications which previously received a communication initiation event, wanting only to receive it, not aspiring to take control. The search for new applications having this event as the communication initiation event and which only want to receive the notification that this event has occurred in the system is also carried out.

Once all the applications which are interested in receiving the event are obtained, the event is sent to each of the applications, each application carrying out the parallel processing of said event (step S11).

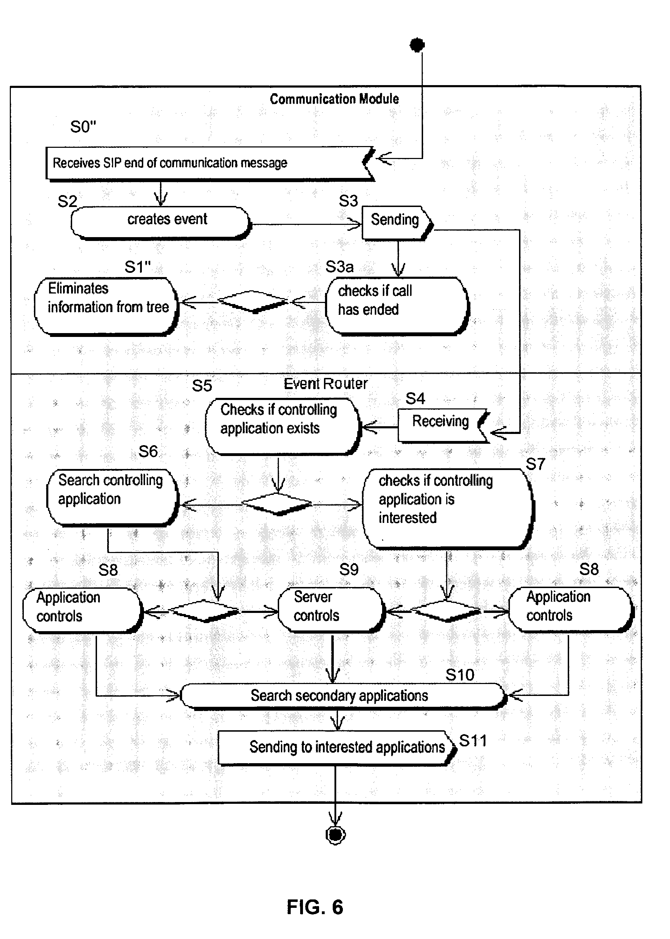

Finally, Figure 6 shows the activity diagram for the end of a call:
The server receives an ending SIP signaling message corresponding to an ongoing communication which is being controlled by the server (step S0") The server extracts the relevant information from the SIP message and transforms it into an asynchronous event (step S2) which is sent to the Event Router (step S3). Once the event has been sent, the server checks if the call can be considered to be finished (step S3a); if affirmative, the server eliminates all the information relating to this communication which was stored in the information tree (step S1").

Once the Event Router receives the event (step S4), it verifies if the communication has an assigned controlling application (step S5). Two different situations can occur:
- The communication does not have a controlling application. The server carries out the search for said application (step S6). The choice of this application is made taking the two factors explained above into consideration:
   - The application must want to control this specific event.
   - The information carried by the asynchronous event must comply with certain criteria.
- The communication has a controlling application. The server verifies if the controlling application is interested in controlling the asynchronous event (step S7). Two different situations can occur:
   - The application wants to process the event. The application takes control of the communication for this event, therefore said event must reach the application (step S8).
   - The application is not interested in the control of this event. The server assumes control (step S9). In this case the controlling application does not want to take control of the communication, but it has the possibility of being able to receive the event but without being able to act on it.

Once the previous step has been carried out, the search for those applications which may be interested in receiving the event but without being able to interact with it (step S10) is carried out. These applications can only be those applications which previously received a communication initiation event wanting only to receive it, not aspiring to take control. The search for new applications having this event as the communication initiation event and which only want to receive the notification that this event has occurred in the system is also carried out.

Once all the applications which are interested in receiving the event are obtained, the event is sent to each of the applications, each application carrying out the parallel processing of said event (step S11).

The application server of the present invention is aimed at telephony applications, but it includes the possibility of making use of JEE features. Thus, in addition to adding the JEE features, a series of alarm services are added which can directly connect with the alarm system of a mobile telephony operator, such as Vodafone for example, to carry out defect or error tracking in the execution of the application server of the present invention, which will be processed in a standard manner using currently available tools.

## Claims

1. A process for transforming and managing messages from SIP signaling in an event-managed asynchronous system, comprising:
- receiving (SO, SO', S0") at least one SIP signaling message in an application server (1),
- extracting certain information relating to a call from said SIP message,
- creating/modifying (S1, S1', S1") a new/existing entry in a tree structure in which said information is stored,
- creating (S2) an asynchronous event from said information stored in the tree,
- sending (S4) said asynchronous event to an Event Distribution Module (20), and,
- assigning the control of said event to an application which wants to control said call (S8) or to the server(S9).

2. A process according to claim 1, wherein said process of assigning control of the event consists of:
i) if it is an event relating to a new call, said Event Distribution Module searches for an application to control said call (S6); in the event that it finds an application which can control said call, said application assumes control of the call (S8), and otherwise, the server assumes control of the call (S9);
ii) if it is an event relating to an ongoing call or to the end of a call, said Event Distribution Module verifies if said call is controlled by an application (S5), and:
a. if said call is controlled by an application, it verifies if said controlling application wants to process the event of said call (S7); in the event that said application wants to process the event, said application continues with the control of the call (S8), and otherwise, the server assumes control of the call (S9); and,
b. if said call is not controlled by any application, the process proceeds as if
it were a new call, searching for an application to control said call (S6); the call thus always being controlled by the server (1) or by a controlling application (App 1, ... App N) deployed in said server.

3. A process according to any of the previous claims, wherein said search for an application to control said call (S6) is done taking into consideration that:
- said application must want to control said event;
- the information carried by the asynchronous event must comply with certain criteria.

4. A process according to any of the previous claims, wherein said tree structure includes an event tree and a call tree.

5. A process according to claim 4, wherein said event tree has a fixed part defined by events Event 1, ... Event N of the server, and a variable part defined by applications App 1, ... App N deployed in said server to receive events.

6. A process according to claim 5, wherein said fixed part is created when the server starts up, carrying out a tree structure with two levels in which an event defined by the server is included for each node of the tree.

7. A process according to any of claims 5-6, wherein said variable part is created from deployment descriptors of the applications deployed in the server.

8. A process according to claim 4, wherein said call tree is formed following a level structure in which:
- the Multi Party Call Control Service (MPCCS) is located in a first level;
- each ongoing Call (Call 1, Call 2, ...) which is managed by the server is located in a second level; and,
- each Leg (Leg 1, ... Leg N) with information relating to each participant in a call is located in a third level.

9. A process according to any of the previous claims, **characterized in that** if it is the end of a call, said modification of the entry existing in the tree structure consists of eliminating such entry.
